# EUROPEAN PATENT SPECIFICATION

(11) **EP 2 486 972 B1**
(45) Date of publication and mention of the grant of the patent: **14.02.2018**
(21) Application number: 09850264.4
(22) Date of filing: 06.10.2009
(51) Int. Cl.: B01D 53/94, F01N 3/08

(54) **METHOD FOR EXHAUST PURIFICATION OF INTERNAL COMBUSTION ENGINE**
VERFAHREN ZUR REINIGUNG VON VERBRENNUNGSMOTORABGASEN
PROCÉDÉ DE PURIFICATION DES GAZ D'ÉCHAPPEMENT D'UN MOTEUR À COMBUSTION INTERNE

(43) Date of publication of application: 15.08.2012
(73) Proprietor: TOYOTA JIDOSHA KABUSHIKI KAISHA, Toyota-shi, Aichi-ken, 471-8571 (JP)
(72) Inventor: NISHIOKA, Hiromasa, Toyota-shi Aichi 471-8571 (JP); TSUKAMOTO, Yoshihisa, Toyota-shi Aichi 471-8571 (JP); UMEMOTO, Kazuhiro, Toyota-shi Aichi 471-8571 (JP); MATSUO, Junichi, Toyota-shi Aichi 471-8571 (JP); ASANUMA, Takamitsu, Toyota-shi Aichi 471-8571 (JP)
(74) Representative: TBK
(86) International application number: PCT/JP2009/067680
(87) International publication number: WO 2011/042993

(56) References cited:
- WO-A1-2008/004493
- JP-A- 2000 126 554

## Description

### Technical Field

The present invention relates to a method for exhaust purification of an internal combustion engine.

### Background Art

In the past, as a catalyst able to remove NOₓ under a lean air-fuel ratio, an NOₓ storage catalyst which stores the NOₓ which is contained in exhaust gas when the air-fuel ratio of the exhaust gas is lean and which releases the stored NOₓ when the air-fuel ratio of the inflowing exhaust gas becomes rich has been known. As the exhaust purification system which uses this NOₓ storage catalyst, an exhaust purification system which comprises a low temperature type NOₓ storage catalyst which has a high NOₓ storage efficiency at a low temperature from 250°C to 400°C and a high temperature type NOₓ storage catalyst which has a high NOₓ storage efficiency at a high temperature of 400°C to 600°C arranged in series inside the engine exhaust passage is known (see Patent Literature 1). In this exhaust purification system, the NOₓ storing material of the high temperature type NOₓ storage catalyst is comprised of an alkali metal, while the NOₓ storing material of the low temperature type NOₓ storage catalyst is comprised of an alkali earth metal.

On the other hand, the fuel and lubrication oil which are used in internal combustion engines contain sulfur. Therefore, the exhaust gas contains SOₓ. However, this SOₓ acts to greatly lower the performance and durability of the aftertreatment device such as the NOₓ storage catalyst etc, which is arranged inside the engine exhaust passage. Therefore, the SOₓ in the exhaust gas is preferably removed.

Therefore, an internal combustion engine which arranges an SOₓ trap catalyst which can trap the SOₓ which is contained in the exhaust gas inside the engine exhaust passage upstream of a post treatment device is known (see Patent Literature 2). Inside this SOₓ trap catalyst, an alkali metal is mainly carried dispersed. When the air-fuel ratio of the exhaust gas which flows into the SOₓ trap catalyst is lean, the SOₓ which is contained in the exhaust gas reacts with nitrates which are present at the surface part of the SOₓ trap catalyst and is trapped in the form of sulfates. On the other hand, in this internal combustion engine, when the sulfates of the surface part of the SOx trap catalyst increase and the SOₓ trap rate starts to fall, the SOₓ trap temperature of the catalyst is held at the melting point of the nitrates of the alkali metal or more, whereby the nitrates inside the SOₓ trap catalyst move to the surface of the SOₓ trap catalyst and are collected there. If nitrates are collected at the surface of the SOₓ trap catalyst, the SO₂ in the exhaust gas reacts with the collected nitrates and is trapped well in the form of sulfates, whereby the NOₓ trap rate is restored.

### Citations List

### Patent Literature

Patent Literature 1: Japanese Patent Publication (A) No. 2000-167356
Patent Literature 2: EP 2 039 901 A1 (WO 2008/004493 A1)

### Summary of Invention

### Technical Problem

However, with this SOₓ trap catalyst, the surface part of the catalyst is covered by sulfates of the alkali metal, so blocked by the sulfates, the SO₂ in the exhaust gas can no longer diffuse inside the SOₓ trap catalyst. As a result, despite the SOₓ trap catalyst still having a sufficient trapping capacity, there is the problem that SO₂ can no longer be trapped and therefore the trapping capacity of the SOₓ trap catalyst cannot be sufficiently utilized.

Note that, as described in Patent Literature 1, if the NOₓ storing material of the NOₓ storage catalyst is comprised of an alkali metal, when the temperature becomes high, the NOₓ storage efficiency becomes higher. As opposed to this, with an SOₓ trap catalyst which carries an alkali metal, when the temperature becomes high, the SOₓ storage efficiency falls. That is, between an NOₓ storage catalyst and an SOₓ trap catalyst, the storage efficiency with respect to temperature is completely opposite.

### Solution to Problem

An object of the present invention is to provide a method for exhaust purification of an internal combustion engine according to claim 1, which can make sufficient use of the trapping capacity of an SOₓ trap catalyst. Preferably embodiments of the method according to the invention are set forth in the dependent claims.

### Advantageous Effects of Invention

The downstream side catalyst is lower in temperature than the upstream side catalyst. Therefore, at the downstream side catalyst, the nitrates of the alkali metal of the SOₓ storing material are kept from becoming a molten state. As a result, the trapping capacity of the downstream side catalyst can be sufficiently utilized for trapping SOₓ. On the other hand, at the upstream side catalyst, the melting point of the nitrates of the alkali earth metal of the SOₓ storing material is high, so the nitrates of the alkali earth metal will usually not become a molten state. Therefore, storage of SOₓ is not obstructed, so the trapping capacity of the upstream side catalyst can be sufficiently utilized for trapping SOₓ. That is, it is possible to make sufficient use of the trapping capacity of the SOₓ trap catalyst to trap SOₓ.

### Brief Description of Drawings

FIG. 1 is an overall view of a compression ignition type internal combustion engine.
FIG. 2 is an enlarged cross-sectional view of an upstream side catalyst and a downstream side catalyst.
FIG. 3 is a view for explaining an SOₓ storage action.
FIG. 4 is an enlarged cross-sectional view of a part A of FIG. 2.
FIG. 5 is a view which shows an SOₓ trapped amount.
FIG. 6 is a view which shows an injection timing of fuel.
FIG. 7 is a view which shows temperature elevation control.
FIG. 8 is an enlarged cross-sectional view of another embodiment which shows a part A of FIG. 2.
FIG. 9 is a view for explaining an adsorption action of SO₂.
FIG. 10 is a view for explaining an adsorption action of SO₂.
FIG. 11 is a view which shows an SO₂ movement rate.
FIG. 12 is a time chart for explaining temperature elevation control of an SOₓ trap catalyst.
FIG. 13 is a view which shows a map of an amount SOXA of SOₓ exhausted per unit time.
FIG. 14 is a flow chart for SOₓ trapping control.

### Description of Embodiments

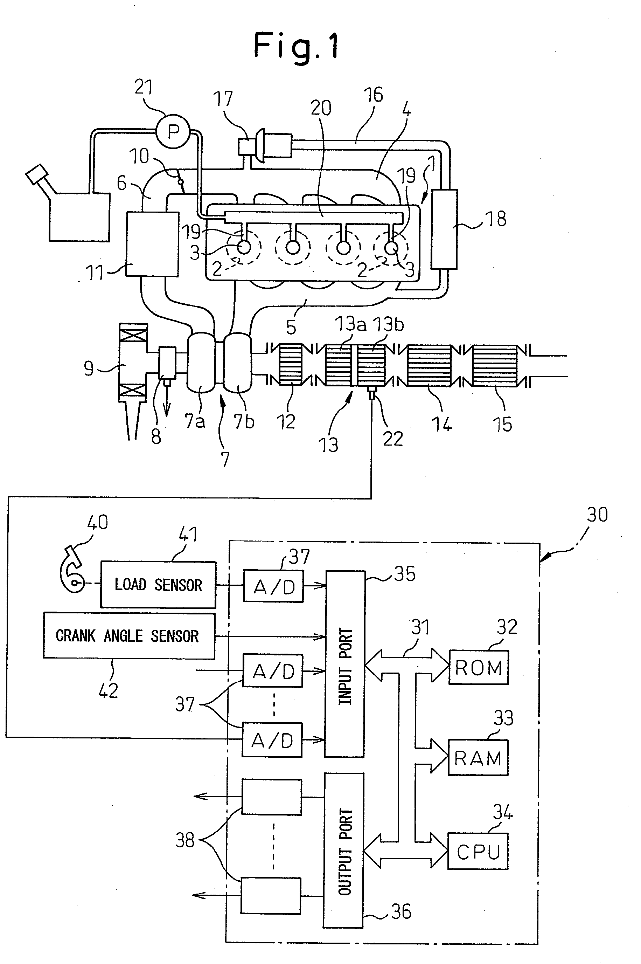

FIG. 1 is an overall view of a compression ignition type internal combustion engine.

Referring to FIG. 1, 1 indicates an engine body, 2 a combustion chamber of each cylinder, 3 an electronically controlled fuel injector for injecting fuel into each combustion chamber 2, 4 an intake manifold, and 5 an exhaust manifold. The intake manifold 4 is connected through an intake duct 6 to an outlet of a compressor 7a of an exhaust turbocharger 7, while the inlet of the compressor 7a is connected through an intake air amount detector 8 to an air cleaner 9. Inside the intake duct 6, a throttle valve 10 which is driven by a step motor is arranged. Furthermore, around the intake duct 6, a cooling device 11 is arranged for cooling the intake air which flows through the inside of the intake duct 6. In the embodiment which is shown in FIG. 1, the engine cooling water is guided to the inside of the cooling device 11 and the engine cooling water is used to cool the intake air.

On the other hand, the exhaust manifold 5 is connected to an inlet of an exhaust turbine 7b of the exhaust turbocharger 7, while the outlet of the exhaust turbine 7b is connected to an inlet of an oxidation catalyst 12. An outlet of the oxidation catalyst 12 is connected to an inlet of the SOₓ trap catalyst 13, while an outlet of the SOₓ trap catalyst 13 is connected to an inlet of an NOₓ storage catalyst 14. An outlet of the NOₓ storage catalyst 14 is connected to a particulate filter 15.

As shown in FIG. 1, the SOₓ trap catalyst 13 is comprised of an upstream side catalyst 13a and a downstream side catalyst 13b into which the exhaust gas which flows out from the upstream side catalyst 13a flows. In the example which is shown in FIG. 1, the upstream side catalyst 13a and the downstream side catalyst 13b are comprised of a pair of catalysts which are arranged at a distance from each other, but the upstream side catalyst 13a and the downstream side catalyst 13b may also be formed from a single monolithic catalyst which is integrally formed.

On the other hand, the exhaust manifold 5 and the intake manifold 4 are connected to each other through an exhaust gas recirculation (hereinafter referred to as "EGR") passage 16. Inside the EGR passage 16, an electronically controlled EGR control valve 17 is arranged. Further, around the EGR passage 16, a cooling device 18 is arranged for cooling the EGR gas which flows through the inside of the EGR passage 16. In the embodiment which is shown in FIG. 1, the engine cooling water is guided to the inside of the cooling device 18 where the engine cooling water is used to cool the EGR gas. On the other hand, each fuel injector 3 is connected through a fuel feed line 19 to a common rail 20. This common rail 20 is fed with fuel from an electronic control type of variable discharge fuel pump 21. The fuel which is fed into the common rail 20 is fed through the fuel feed lines 19 to the fuel injectors 3.

The electronic control unit 30 is comprised of a digital computer which is provided with a ROM (read only memory) 32, RAM (random access memory) 33, CPU (microprocessor) 34, input port 35, and output port 36, which are connected with each other by a bidirectional bus 31. The SOₓ trap catalyst 13 has a temperature sensor 22 attached to it for detecting the temperature of the downstream side catalyst 13b. The output signals of the temperature sensor 22 and the intake air amount detector 8 are input through corresponding AD converters 37 to the input port 35.

An accelerator pedal 40 has a load sensor 41 connected to it which generates an output voltage proportional to the amount of depression L of the accelerator pedal 40. The output voltage of the load sensor 41 is input through a corresponding AD converter 37 to the input port 35. Furthermore, the input port 35 has a crank angle sensor 42 connected to it for generating an output pulse every time a crankshaft rotates by for example 15°. On the other hand, the output port 36 is connected through the corresponding drive circuits 38 to the fuel injectors 3, step motor for driving the throttle valve 10, EGR control valve 16, and fuel pump 20.

Now then, in the compression ignition type internal combustion engine, the air-fuel ratio of the exhaust gas which is exhausted from the engine is normally lean. At this time, the NOₓ which is contained in the exhaust gas is stored in the NOₓ storage catalyst 14. On the other hand, if the NOₓ storage amount of the NOₓ storage catalyst 14 approaches saturation, the air-fuel ratio of the exhaust gas which is exhausted from the engine is temporarily made rich whereby the NOₓ which was stored in the NOₓ storage catalyst 14 is released and reduced.

In this case, if the exhaust gas which flows into the NOₓ storage catalyst 14 contains SOₓ, this SOₓ is stored in the NOₓ storage catalyst 14 and, as a result, the amount of NOₓ which the NOₓ storage catalyst 14 can store gradually is reduced. Finally, the NOₓ ends up no longer being able to be stored. That is, the NOₓ storage catalyst 14 is poisoned by the SOₓ. Therefore, in the embodiment which is shown in FIG. 1, to prevent the NOₓ storage catalyst 14 from being poisoned by SOₓ in this way, the SOₓ trap catalyst 13 is arranged upstream of the NOₓ storage catalyst 14.

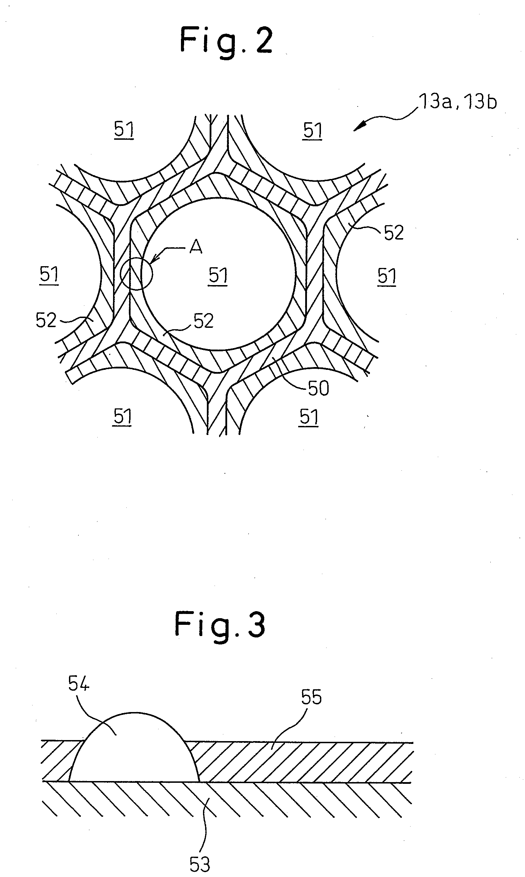

The upstream side catalyst 13a and the downstream side catalyst 13b of the SOₓ trap catalyst 13 have the same cross-sectional shapes. FIG. 2 is an enlarged cross-sectional view of the upstream side catalyst 13a and the downstream side catalyst 13b at the cross-section vertical to the direction of flow of the exhaust gas. In FIG. 2, 50 shows the base member of the honeycomb structure which is formed from for example cordierite. Due to this base member 50, a large number of exhaust gas channels 51 are formed extending straight in the direction of flow of the exhaust gas. At the inner circumference of the base member 50 which defines the exhaust gas channels 51, a coating layer 52 comprised of aggregates of fine powder is formed.

FIG. 3 schematically shows enlarged a cross-section of the surface part of the fine powder. In FIG. 3, 53 shows a catalyst carrier which is comprised of for example alumina. On this catalyst carrier 53, a precious metal catalyst 54 and an SOₓ storing material 55 are carried. In the example which is shown in FIG. 3, this precious metal catalyst 54 is comprised of platinum Pt.

On the other hand, the stronger the SOₓ storing material 55 in basicity, the higher the SOₓ storage ability. Therefore, as the SOₓ storing material 55, it can be said that a strongly basic alkali metal is preferably used. However, if using an alkali metal as the SOₓ storing material 55, when the temperature of the SOₓ storing material 55 becomes higher, the problem arises that the SOₓ trapping ability of the SOₓ trap catalyst 13 ends up falling. Next, this will be explained with reference to the example of the case of use of potassium, which is one type of alkali meal, as the SOₓ storing material 55.

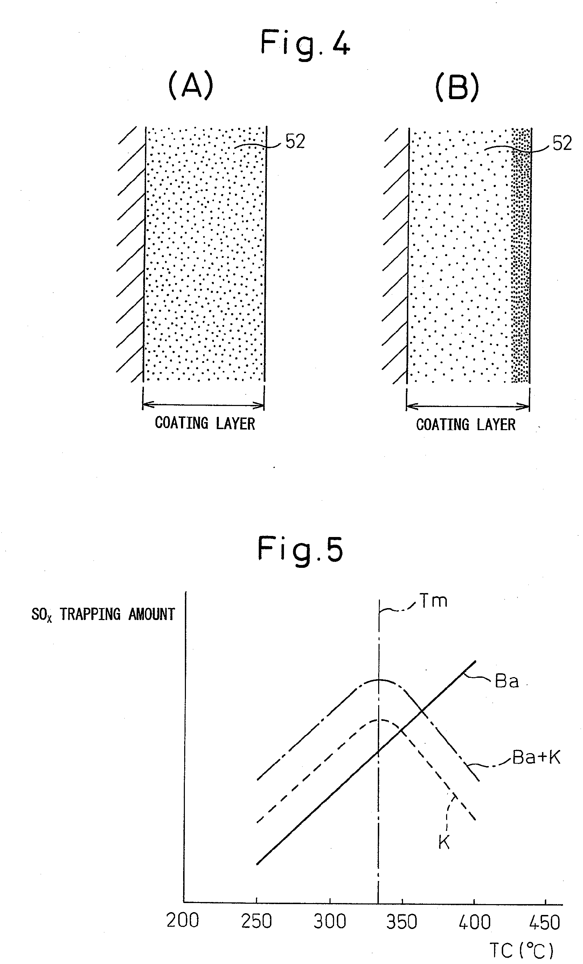

FIGS. 4(A) and (B) are enlarged cross-sectional views of the coating layer 52 of the part which is shown by the arrow A in FIG. 2. Inside this coating layer 52, platinum Pt and potassium K are contained dispersed. In FIGS. 4(A) and (B), the black dots schematically show the dispersed state of the potassium K.

Now then, FIG. 4(A) shows when the SOₓ trap catalyst 13 is new. At this time, inside the coating layer 52, potassium K is uniformly dispersed. Further, at this time, the potassium K inside of the coating layer 52 bonds with the CO₂ in the atmosphere to form carbonates K₂CO₃. If the engine is operated, the NO which is contained in a large amount in the exhaust gas is oxidized on the platinum Pt. Next, it is taken into the coating layer 52 and dispersed inside the coating layer 52 in the form of nitric acid ions NO₃⁻. The nitric acid ions NO₃⁻ are stronger in acidity than the carbonic acid ions CO₃⁻, therefore the carbonic acid ions CO₃⁻ which are bonded with the potassium K are replaced with nitric acid ions NO₃⁻, so nitrates KNO₃ are produced in the coating layer 52.

On the other hand, if the engine is operated, the SOₓ contained in the exhaust gas, that is, the SO₂, is oxidized on the platinum Pt. Next, it is taken into the coating layer 52 in the form of sulfuric acid ions SO₄²⁻. In this regard, the concentration of SOₓ which is contained in the exhaust gas is considerably lower than the concentration of NOₓ, therefore around when the SOₓ is taken into the coating layer 52 in the form of sulfuric acid ions SO₄²⁻ , most of the potassium K inside the coating layer 52 has become nitrates KNO₃. Therefore, the SO₂ is taken into the coating layer 52 at which the nitrates KNO₃ are produced in the form of sulfuric acid ions SO₄²⁻_{.}

In this case, sulfuric acid ions SO₄²⁻ are stronger in acidity than nitric acid ions NO₃⁻. Therefore, at this time, the nitric acid ions NO₃⁻ which are bonded with the potassium K are replaced with sulfuric acid ions SO₄²⁻, so sulfates K₂SO₄ are formed inside the coating layer 52. In this way, SOₓ is trapped inside the SOₓ trap catalyst 13. In this case, the sulfates K₂SO₄ are, first, formed at the surface part of the coating layer 52.

On the other hand, the nitrates KNO₃ inside the coating layer 52 become a molten state when the temperature of the coating layer 52 becomes the melting point of the nitrates KNO₃ or more. At this time, if sulfates K₂SO₄ are produced at the surface part of the coating layer 52, the surface part of the coating layer 52 becomes strongly acidic. As a result, the nitrates KNO₃ move through the inside of the coating layer 52 toward the surface of the coating layer 52 and, as shown in FIG. 4(B), the potassium K is collected in the form of nitrates KNO₃ at the surface part of the coating layer 52.

These nitrates KNO₃ react with the sulfuric acid ions SO₄²⁻ which are derived from the SO₂ in the exhaust gas and become sulfates K₂SO₄. As a result, a layer of sulfates K₂SO₄ is formed at the surface part of the coating layer 52. However, if, in this way, a layer of sulfates K₂SO₄ is formed at the surface part of the coating layer 52, the SO₂ in the exhaust gas is obstructed by the layer of the sulfates K₂SO₄ and can no longer disperse through the inside of the coating layer 52. Therefore, the SOₓ storing material 55 inside the coating layer 52 can no longer be actively utilized for storing SOₓ. Therefore, when using an alkali metal as the SOₓ storing material 55, it is necessary to prevent the temperature of the coating layer 52 from exceeding the melting point of the nitrates of the alkali metal.

As the alkali metal for the SOₓ storing material 55, at least one metal which is selected from lithium Li, sodium Na, and potassium K is used. The melting points of the carbonates, nitrates, and sulfates of these alkali metals are shown in the following table:

| Carbonate | Melting point | Nitrate | Melting point | Sulfate | Melting point |
|---|---|---|---|---|---|
| Li₂CO₃ | 618°C | LiNO₃ | 261°C | Li₂SO₄ | 860°C |
| Na₂CO₃ | 851°C | NaNO₃ | 308°C | Na₂SO₄ | 884°C |
| K₂CO₃ | 891°C | KNO₃ | 333°C | K₂SO₄ | 1069°C |

From the above table, it is learned that the melting point of the alkali metal nitrates is from about 260°C to 340°C and is considerably lower than the melting point of the carbonates and sulfates.

On the other hand, it is also possible to use an alkali earth metal such as barium Ba or calcium Ca as the SOₓ storing material 55. The melting points of the carbonates, nitrates, and sulfates of alkali earth metal are shown in the following table.

| Carbonate | Melting point | Nitrate | Melting point | Sulfate | Melting point |
|---|---|---|---|---|---|
| BaCO₃ | 811°C | Ba(NO₃)₂ | 592°C | BaSO₄ | 1580°C |
| CaCO₃ | 825°C | Ca(NO₃)₂ | 561°C | CaSO₄ | 1460°C |

From the above table, it is learned that the melting point of the nitrates of an alkali earth metal is from about 560°C to 600°C and is lower than the melting point of the carbonates and sulfates and that the melting point of the nitrates of an alkali earth metal is considerably higher than the melting point of the nitrates of an alkali metal.

Now then, the SOₓ trap catalyst 13 is for example prepared by dipping the base member 50 of the SOₓ trap catalyst 13 in acetic acid or another solvent in which an alkali metal is dissolved so as to coat the base member 50 with the alkali metal. The curves K, B + K, and Ba in FIG. 5 show the relationships between the SOₓ trapped amount of the SOₓ trap catalyst 13 and the catalyst temperature TC of the SOₓ trap catalyst 13 in the case of dissolving potassium K, barium Ba and potassium K, and barium Ba in the solvent in exactly the dissolvable amounts. That is, FIG. 5 shows the relationships between the SOₓ trapped amount and the catalyst temperature TC in the case of making the SOₓ trap catalyst 13 carry potassium K, barium Ba and potassium K, and barium Ba as much as possible. Note that, in FIG. 5, Tm shows the melting point of potassium nitrate KNO₃.

Now then, the higher the catalyst temperature TC, the easier it is for the SOₓ contained in the exhaust gas to disperse into the coating layer 52. Therefore, basically, the higher the catalyst temperature TC, the more the SOₓ trapped amount increases. However, as explained above, when the SOₓ storing material 55 includes an alkali metal, if the nitrates of the alkali metal become molten in state, the nitrates will collect at the surface part of the SOₓ trap catalyst 13 and a layer of alkali metal sulfates which obstructs the storage of SOₓ will be formed at the surface part of the SOₓ trap catalyst 13. Therefore, as shown in FIG. 5 by the broken line, when using potassium K as the SOₓ storing material 55, if the catalyst temperature TC exceeds the melting point Tm of the nitrates of potassium K, the SOₓ trapped amount starts to fall due to formation of a layer of potassium sulfate K₂SO₄.

In this case, the amount of potassium sulfate K₂SO₄ which is produced at the surface part of the coating layer 52 increases the higher the catalyst temperature TC, therefore, as shown in FIG. 5, the higher the catalyst temperature TC, the more the SOₓ trapped amount is reduced. On the other hand, even when using both an alkali metal and an alkali earth metal as the SOₓ storing material 55, so long as an alkali metal is contained, a layer of sulfates of the alkali metal which obstructs the storage of SOₓ is formed at the surface part of the coating layer 52. Therefore, as shown in FIG. 5 by the dot and dash line, even when using both barium Ba and potassium K as the SOₓ storing material 55, if catalyst temperature TC exceeds the melting point Tm of nitrates of potassium K, the higher the catalyst temperature TC, the less the SOₓ trapped amount.

On the other hand, as explained earlier, the melting point of nitrates of an alkali earth metal is considerably higher than the melting point of nitrates of an alkali metal. Therefore, when using an alkali earth metal as the SOₓ storing material 55, usually a layer of sulfates of an alkali earth metal which obstructs the storage of SOₓ is not formed at the surface part of the coating layer 52. Therefore, as shown by the solid line in FIG. 5, when using barium Ba as the SOₓ storing material 55, the SOₓ trapped amount increases as the catalyst temperature TC increases.

Now, as will be understood from FIG. 5, when the catalyst temperature TC is lower than the melting point Tm of the nitrates of potassium K, a larger SOₓ trapped amount is obtained when using potassium K as the SOₓ storing material 55 compared with when using barium Ba as the SOₓ storing material 55. Further, compared with barium Ba, potassium K is stronger in strength in holding the stored SOₓ. Therefore, when the catalyst temperature TC is lower than the melting point Tm of nitrates of potassium K, it can be said to be preferable to use potassium K, that is, an alkali metal, as the SOₓ storing material 55.

As opposed to this, if the catalyst temperature TC becomes higher than the melting point Tm of nitrates of potassium K, as will be understood from FIG. 5, the SOₓ trapped amount becomes higher when using barium Ba as the SOₓ storing material 55 compared with when using potassium K as the SOₓ storing material 55. Therefore, when the catalyst temperature TC is higher than the melting point of nitrates of potassium K, it is preferable to use barium Ba, that is, an alkali earth metal, as the SOₓ storing material 55.

Now then, if comparing the upstream side catalyst 13a and the downstream side catalyst 13b of the SOₓ trap catalyst 13, the catalyst temperature TC of the upstream side catalyst 13a becomes higher than the catalyst temperature TC of the downstream side catalyst 13b. Therefore, from FIG. 5, it is learned that as the SOₓ storing material 55 of the upstream side catalyst 13a, an alkali earth metal such as barium Ba is preferably used, while as the SOₓ storing material 55 of the downstream side catalyst 13b, an alkali metal such as potassium K is preferably used. Therefore, in the present invention, the SOₓ storing material 55 of the upstream side catalyst 13a is mainly comprised of an alkali earth metal, while the SOₓ storing material 55 of the downstream side catalyst 13b is mainly comprised of an alkali metal.

Note that, as will be understood from FIG. 5, when the catalyst temperature TC is lower than the melting point Tm of the nitrates of potassium K, the SOₓ trapped amount becomes highest when configuring the SOₓ storing material 55 from both barium Ba and potassium K, that is, from both an alkali earth metal and alkali metal. Therefore, the SOₓ storing material 55 of the downstream side catalyst 13b is preferably comprised of an alkali metal and an alkali earth metal.

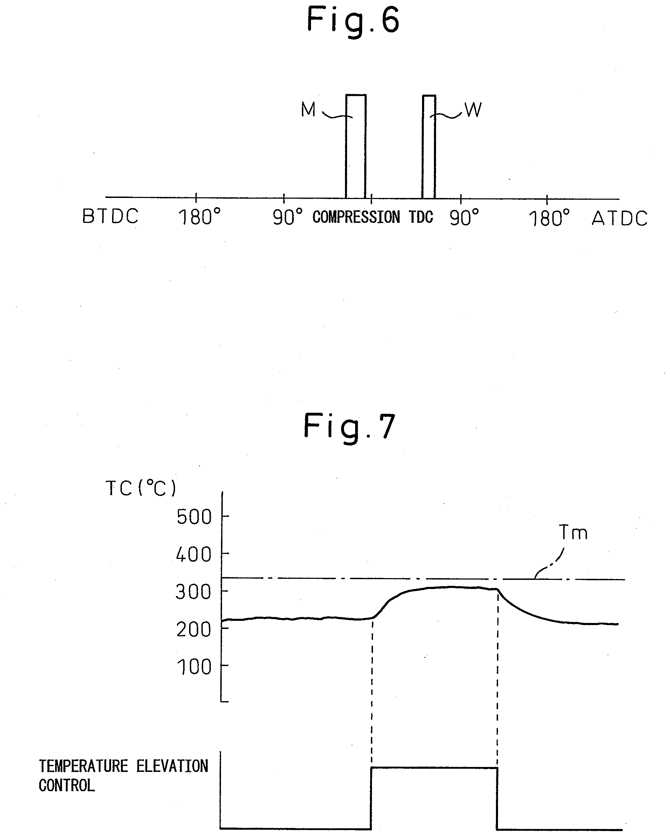

On the other hand, as explained earlier, when NOₓ should be released from the NOₓ storage catalyst 14, the air-fuel ratio of the exhaust gas which is exhausted from the engine is temporarily made rich. In this case, in the embodiment according to the present invention, as shown in FIG. 6, the combustion chambers 2 are injected from the fuel injectors 3 with additional fuel W in addition to the combustion-use fuel M so that the air-fuel ratio of the exhaust gas which is exhausted from the engine is made rich. Note that, in FIG. 6, the abscissa indicates the crank angle. This additional fuel W is injected at the timing when it burns, but does not appear as engine output, that is, slightly before ATDC 90° after compression top dead center. If the air-fuel ratio of the exhaust gas is made rich by making the additional fuel W burn in this way, SOₓ is prevented from being released from the SOₓ trap catalyst 13.

Further, in the embodiment according to the present invention, when the particulate filter 15 should be regenerated, a temperature elevation action of the particulate filter 15 is performed. This temperature elevation action is for example performed by retarding the timing of fuel injection from the fuel injectors 3 so as to make the exhaust gas temperature rise. Note that, when performing such a temperature elevation action, the catalyst temperature TC of the downstream side catalyst 13b has to be prevented from exceeding the melting point of the nitrates of potassium K. Therefore, in the embodiment according to the present invention, as shown in FIG. 7, even if such temperature elevation control is performed, the catalyst temperature TC of the downstream side catalyst 13b is maintained at less than the melting point Tm of the nitrates of the alkali metal which are contained in the SOₓ storing material of the downstream side catalyst 13b.

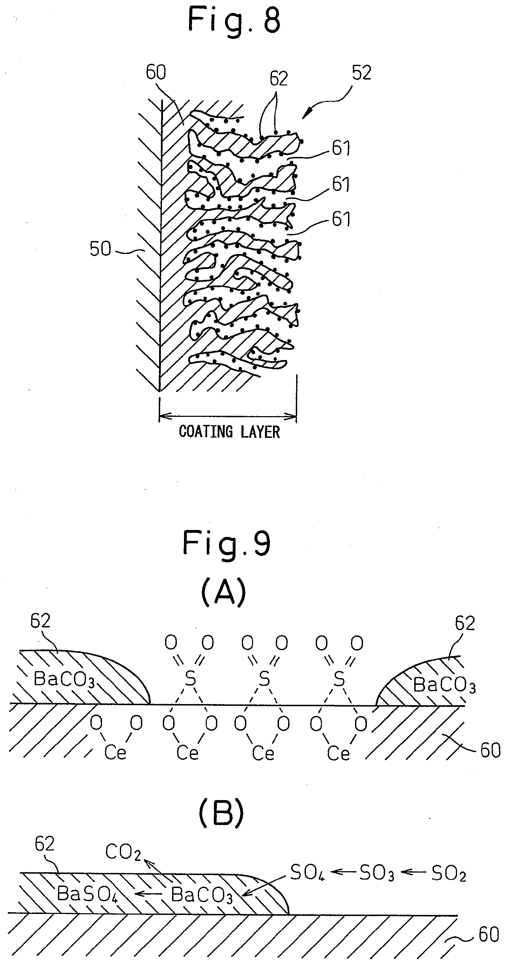

Next, referring to FIG. 8 to FIG. 14, another embodiment will be explained. Note that, in this embodiment as well, the SOₓ trap catalyst 13 is comprised of an upstream side catalyst 13a and a downstream side catalyst 13b into which exhaust gas which flows out from the upstream side catalyst 13a flows, and the SOₓ storing material of the upstream side catalyst 13a is mainly comprised of an alkali earth metal, while the SOₓ storing material of the downstream side catalyst 13b is mainly comprised of an alkali metal.

First, referring to FIG. 8, this FIG. 8 is an enlarged cross-sectional view of the coating layer 52 of the part shown by the arrow A in FIG. 2. As shown in FIG. 8, in this embodiment, the coating layer 52 is formed by a catalyst carrier 60 which has countless pores 61. In this embodiment, this catalyst carrier 60 is comprised over 90 percent by ceria CeO₂. Further, at the surfaces of the pores 61, as shown by the black dots, countless particles of the SOₓ storing material 62 are carried dispersed. Note that, in this embodiment, as the SOₓ storing material 62 of the upstream side catalyst 13a, barium Ba is used, while as the SOₓ storing material 62 of the downstream side catalyst 13b, barium Ba and potassium K are used.

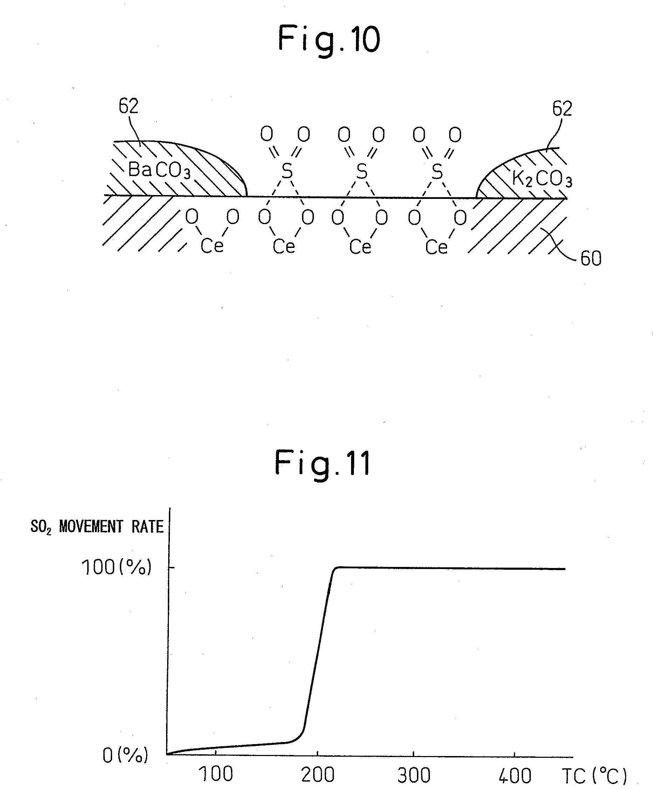

FIGS. 9(A) and (B) schematically show the surface part of a pore 61 of the upstream side catalyst 13a, that is, the surface part of the catalyst carrier 60, while FIG. 10 schematically shows the surface part of a pore 61 of the downstream side catalyst 13b, that is, the surface part of the catalyst carrier 60. If the catalyst carrier 60 of the upstream side catalyst 13a carries barium Ba, this barium Ba bonds with the CO₂ in the atmosphere to form carbonates BaCO₃. Therefore, as shown in FIG. 9(A), the SOₓ storing material 62 which is carried on the catalyst carrier 60 takes the form of carbonates BaCO₃. Similarly, if the catalyst carrier 60 of the downstream side catalyst 13b carries barium Ba and potassium K, the barium Ba and potassium K bond with the CO₂ in the atmosphere to become the carbonates BaCO₃ and K₂CO₃. Therefore, as shown in FIG. 10, the SOₓ storing material 62 which is carried on the catalyst carrier 60 takes the form of carbonates BaCO₃ and K₂CO₃.

At the upstream side catalyst 13a and the downstream side catalyst 13b, SOₓ is trapped by similar mechanisms. Therefore, referring to FIGS. 9(A) and (B) and FIG. 10, the SOₓ trapping mechanism of the upstream side catalyst 13a and the SOₓ trapping mechanism of the downstream side catalyst 13b will be simultaneously explained.

The majority of the SOₓ which is contained in exhaust gas is SO₂. This SO₂ is oxidized when contacting platinum or another precious metal catalyst and becomes SO₃. The SO₂ does not react with the carbonates BaCO₃ or K₂CO₃ as SO₂ as is. When the SO₂ is oxidized and becomes SO₃, this SO₃ reacts with the carbonates and becomes sulfates. That is, if the SO₂ is oxidized, it is stored in the SOₓ storing material 60 in the form of sulfates.

However, in this embodiment, the catalyst carrier 60 does not carry a precious metal catalyst like platinum which can oxidize SO₂. Therefore, the SO₂ which is contained in exhaust gas enters the pores 61 without being oxidized. On the other hand, exhaust gas is in a state of oxygen excess. Therefore, the cerium Ce which forms the catalyst carrier 60 takes the form of ceria CeO₂ as shown in FIG. 9(A) and FIG. 10.

SO₂ and ceria CeO₂ easily electrically bond. Therefore, if the SO₂ which enters the pores 61 encounters the ceria CeO₂, the SO₂ is chemically adsorbed at the ceria CeO₂ such as shown in FIG. 9(A) and FIG. 10. That is, the SO₂ which enters the pores 61 is chemically adsorbed on the catalyst carrier 60 inside the pores 61. In this case, it is believed that the SO₂ is successively chemically adsorbed on the catalyst carrier 60 from the inlet parts of the pores 61 toward the insides. Therefore, finally, the SO₂ is chemically adsorbed on the catalyst carrier 60 up to the deepest parts of the pores 61. It is experimentally confirmed that the SO₂ is adsorbed on the catalyst carrier comprised of ceria CeO₂ in this way.

On the other hand, it is experimentally confirmed that if making the temperature of the SOₓ trap catalyst 13 rise to about 200°C or more in the state with the SO₂ chemically adsorbed on the catalyst carrier 60 in this way, the SO₂ disappears and sulfates BaSO₄ or K₂SO₄ are produced. In this case, the process by which the SO₂ which chemically bonds with the ceria CeO₂ becomes sulfates BaSO₄ or K₂SO₄ is not clear, but probably the following reaction occurs.

That is, if making the temperature of the SOₓ trap catalyst 13 rise to about 200°C or more, the SO₂ which was chemically adsorbed on the ceria CeO₂ robs oxygen from the ceria CeO₂, passes through SO₃, and becomes SO₄. The cerium Ce which robs the oxygen is reduced in valence from tetravalent to trivalent and becomes ceria Ce₂O₃. On the other hand, the acidic SO₄ which is produced immediately moves to the nearby basic SOₓ storing material 62 or moves on the ceria, then reaches the SOₓ storing material 62. Sulfuric acid SO₄ is stronger in acidity than carbonic acid CO₃ therefore at this time, at the upstream side catalyst 13a, as shown in FIG. 9(B), if SO₄ reaches the carbonates BaCO₃, the carbonic acid CO₃ which bonds with the barium Ba is replaced with sulfuric acid SO₄, so sulfates BaSO₄ are produced in the coating layer 52.

On the other hand, at this time, at the downstream side catalyst 13b, when the produced SO₄ reaches the carbonates BaCO₃ or K₂CO₃, the carbonic acid CO₃ which bonds with the barium Ba or the potassium K is replaced with sulfuric acid SO₄, so the sulfates BaSO₄ and K₂SO₄ are produced in the coating layer 52.

Sulfates BaSO₄ or K₂SO₄ are stable and hard to break down, therefore once sulfates are formed, the sulfates are held inside the coating layer 52 as sulfates. That is, SO₂ is trapped in the form of sulfates inside the SOₓ trap catalyst 13. In this embodiment, the SO₂ which enters the pores 61 diffuses in a broad range inside the pores 61 and is chemically adsorbed on the catalyst carrier 60, so the SOₓ storing material 62 as a whole which diffuses inside the pores 61 is used to store the SO₂, therefore it is possible to actually utilize the trapping capacity of the SOₓ trap catalyst 13.

As explained above, it is believed that if the temperature of the SOₓ trap catalyst 13 exceeds about 200°C, the chemically adsorbed SO₂ starts to move toward the SOₓ storing material 62. FIG. 11 shows the relationship between the rate of movement of SO₂ which is derived from experiments and the temperature TC of the SOₓ trap catalyst 13. From FIG. 11, it will be understood that when the temperature TC of the SOₓ trap catalyst 13 is about 200°C or less, there is almost no movement of SO₂ toward the SOₓ storing material 62 and that when the temperature TC of the SOₓ trap catalyst 13 exceeds about 200°C, substantially all of the adsorbed SO₂ moves toward the SOₓ storing material 62.

The temperature TC of the SOₓ trap catalyst 13 when the adsorbed SO₂ starts to move toward the SOₓ storing material 62 is called the "adsorbed SO₂ movement start temperature" in the present Description. This adsorbed SO₂ movement start temperature is the temperature which is determined from the chemical adsorption energy of SO₂. In the embodiment according to the present invention, this adsorbed SO₂ movement start temperature is about 200°C as will be understood from FIG. 11.

Now, to make the SO₂ which is contained in the exhaust gas be suitably chemically adsorbed, it is preferable to form the catalyst carrier 60 from an oxygen absorbing and releasing material such as ceria which changes in oxidation state in exhaust gas. As the metal which forms the oxygen absorbing and releasing material, it is possible to use iron Fe in addition to cerium Ce. This iron Fe also becomes the two oxidized states with different valences, that is, FeO and Fe₂O₃, in the exhaust gas.

Further, instead of a metal oxide such as ceria or iron oxide, it is also possible to use palladium Pd which becomes the two oxidized states with different valences, that is, Pd and PdO, in exhaust gas. Further, while not changing in valence in exhaust gas, it is also possible to use alumina Al₂O₃ with the SO₂ adsorption action.

That is, if expressed including all of these, in this embodiment, SO₂ adsorption-use oxides which are able to adsorb SO₂ are used for adsorbing the SO₂. In this embodiment, the SO₂ adsorption-use oxides are comprised of metal oxides. As explained earlier, the metal oxides are preferably comprised of an oxygen absorbing and releasing material which changes in oxidation state in exhaust gas.

As the SO₂ adsorption-use oxides, ceria is used. When this ceria accounts for over 90 percent of the catalyst carrier 60, as explained above, the adsorbed SO₂ movement start temperature becomes about 200°C. However, this adsorbed SO₂ movement start temperature changes depending on the SO₂ adsorption-use oxides used and amount of use. Further, depending on the SO₂ adsorption-use oxides and amounts used, sometimes the amount of SO₂ movement will not rapidly rise with respect to the rise in temperature TC of the SOₓ trap catalyst 13 as shown in FIG. 11, but will slowly rise. In this case, the catalyst temperature TC when the amount of SO₂ movement is constant rises to, for example, 50 percent is made the adsorbed SO₂ movement start temperature. That is, the adsorbed SO₂ movement start temperature is the temperature which is preset as the most suitable as the temperature which represents the movement start temperature of SO₂. This adsorbed SO₂ movement start temperature changes in various ways in accordance with the adsorption-use oxides used and the amount used.

On the other hand, as explained earlier, in the embodiment according to the present invention, the catalyst carrier 60 does not carry a precious metal catalyst like platinum which can oxidize SO₂. However, when the trapping capacity of the SOₓ trap catalyst 13 can be sufficiently utilized even if a small amount of SO₂ is oxidized, it is possible to make the catalyst carrier 60 carry a small amount of a precious metal catalyst such as platinum.

Now then, when the temperature of the SOₓ trap catalyst 13 is lower than the adsorbed SO₂ movement start temperature, the SO₂ continues to be adsorbed on the SO₂ adsorption-use oxides, that is, the catalyst carrier 60. As opposed to this, when the temperature of the SOₓ trap catalyst 13 rises to the adsorbed SO₂ movement start temperature or more, the adsorbed SO₂ is converted to sulfates.

If the adsorbed SO₂ is converted to sulfates, the SO₂ adsorption amount becomes zero and the ceria gradually changes from Ce₂O₃ to CeO₂. When the temperature of the SOₓ trap catalyst 13 is higher than the adsorbed SO₂ movement start temperature, it is believed that SO₂ starts to move and becomes sulfates just when being adsorbed on the catalyst carrier 60. When the temperature of the SOₓ trap catalyst 13 exceeds the adsorbed SO₂ movement start temperature, then again becomes less than the adsorbed SO₂ movement start temperature, the adsorption action of the SO₂ on the catalyst carrier 60 is again started.

In this way, the SO₂ which is adsorbed at the catalyst carrier 60 when the temperature of the SOₓ trap catalyst 13 is lower than the adsorbed SO₂ movement start temperature, is converted to sulfates when the temperature of the SOₓ trap catalyst 13 becomes the adsorbed SO₂ movement start temperature or more, the action of conversion of this adsorbed SO₂ to sulfates is repeated, and the SO₂ in the exhaust gas is trapped at the SOₓ trap catalyst 13 in the form of sulfates. In this way, the action of converting the adsorbed SO₂ to sulfates is repeated so that the SO₂ in the exhaust gas continues to be adsorbed at the SOₓ trap catalyst 13. This is one feature of this embodiment.

That is, in this embodiment, the upstream side catalyst 13a and the downstream side catalyst 13b include SO₂ adsorption-use oxides 60 which can adsorb the SO₂ contained in exhaust gas and an SOₓ storing material 62 which can store SOₓ in the form of sulfates. In the upstream side catalyst 13a and the downstream side catalyst 13b, the SO₂ contained in the exhaust gas is adsorbed at the SO₂ adsorption-use oxides 60 without being oxidized, and when the temperature of the catalyst becomes higher than the adsorbed SO₂ movement start temperature where the SO₂ adsorbed at the SO₂ adsorption-use oxides 60 starts to move toward the corresponding SOₓ storing material 62, the SO₂ adsorbed at the SO₂ adsorption-use oxides 60 are oxidized and stored in the form of sulfates in the corresponding SOₓ storing material 62. During engine operation, the temperatures of the upstream side catalyst 13a and the downstream side catalyst 13b are repeatedly made to change from the adsorbed SO₂ movement start temperature or less to the adsorbed SO₂ movement start temperature or more.

Note that, in this embodiment as well, to prevent a layer of alkali metal sulfates which obstructs storage of SOₓ from being formed at the surface layer part of the coating layer 52 of the downstream side catalyst 13b, the catalyst temperature TC of the downstream side catalyst 13b is maintained at the melting point of the alkali metal nitrates or less.

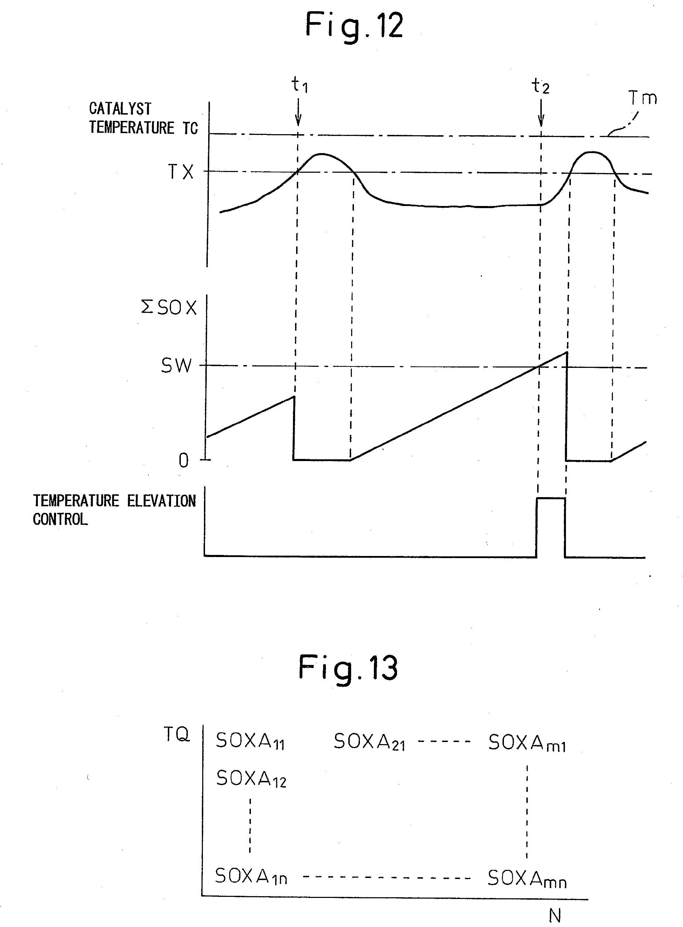

FIG. 12 to FIG. 14 show an example of SOₓ trapping control. First, referring to FIG. 12, FIG. 12 shows the change in the temperature TC of the downstream side catalyst 13b, the change in the adsorbed amount ΣSOₓ of SO₂ which is adsorbed on the catalyst carrier 60 of the downstream side catalyst 13b, and the timing of temperature elevation control for raising the temperatures of the upstream side catalyst 13a and the downstream side catalyst 13b. Note that, in FIG. 12, TX shows the adsorbed SO₂ movement start temperature, while SW shows the allowable limit of the amount of SO₂ adsorption.

The amount SOXA of SO₂ adsorption is calculated from the amount SOXA of SOₓ which is exhausted from the engine per unit time. This amount SOXA of SOₓ is for example stored as a function of the engine load L and the engine speed N in the form of the map such as shown in FIG. 13 in advance in the ROM 32. Further, the temperature elevation control is performed by for example making the exhaust temperature rise by injecting additional fuel into the combustion chambers 2 in addition to the main fuel or retarding the injection timing of the main fuel.

When the SOₓ adsorption amount ΣSOₓ is at the allowable limit value SW or less like at the time t₁ of FIG. 12, if the temperature TC of the downstream side catalyst 13b exceeds the adsorbed SO₂ movement start temperature TX, the SO₂ adsorption amount ΣSOₓ is made zero, then the SO₂ adsorption amount ΣSOₓ is maintained at zero while the catalyst temperature TC is the adsorbed SO₂ movement start temperature TX or more. At this time, the SO₂ adsorption amount of the upstream side catalyst 13a also becomes zero. On the other hand, when the catalyst temperature TC is the adsorbed SO₂ movement start temperature TX or less like at the time t₂ of FIG. 12, if the SO₂ adsorption amount ΣSOₓ exceeds the allowable limit value SW, the SO₂ adsorption amount approaches saturation, so it is necessary to convert the adsorbed SO₂ to sulfates. Therefore, at this time, temperature elevation control of the upstream side catalyst 13a and the downstream side catalyst 13b is performed until the catalyst temperature TC exceeds the adsorbed SO₂ movement start temperature TX.

In this SOₓ trapping control, when the temperature TC of the downstream side catalyst 13b does not exceed the adsorbed SO₂ movement start temperature TX for a predetermined period, temperature elevation control of the upstream side catalyst 13a and the downstream side catalyst 13b is performed so that the temperatures of the upstream side catalyst 13a and the downstream side catalyst 13b exceed the adsorbed SO₂ movement start temperature TX. However, in this case, when the temperature of the upstream side catalyst 13a or both the temperature of the upstream side catalyst 13a and the temperature of the downstream side catalyst 13b do not exceed the adsorbed SO₂ movement start temperature for a predetermined period, temperature elevation control of the upstream side catalyst 13a and the downstream side catalyst 13b may be performed so that the temperatures of the upstream side catalyst 13a and the downstream side catalyst 13b exceed the adsorbed SO₂ movement start temperature TX.

Note that, in the example which is shown in FIG. 12, the above-mentioned predetermined period is made the period from when the SO₂ adsorption amount ΣSOₓ starts to rise to when the allowable limit value SW is reached. That is, in the example which is shown in FIG. 12, a calculating means is provided for calculating the SO₂ adsorption amount ΣSOₓ, and when the calculated SO₂ adsorption amount ΣSOₓ exceeds the predetermined allowable limit value SW, temperature elevation control of the upstream side catalyst 13a and the downstream side catalyst 13b is performed.

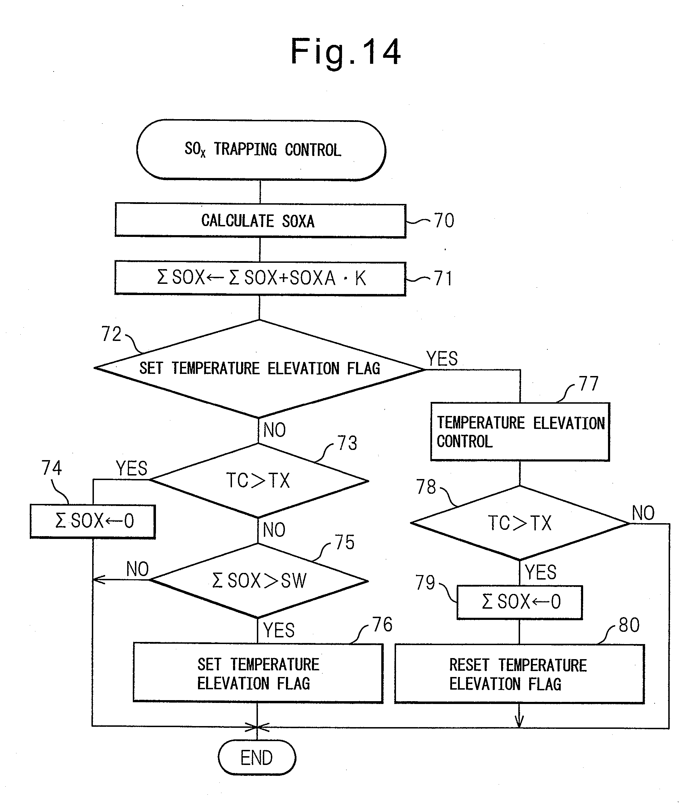

FIG. 14 shows the SOₓ trapping control routine. Note that, this routine is executed by interruption every predetermined time period.

Referring to FIG. 14, first, at step 70, the amount SOXA of SOₓ which is exhausted per unit time is calculated from the map which is shown in FIG. 13. Next, at step 71, the value of the exhausted SOₓ amount SOXA multiplied with the ratio K of adsorption (<1.0) at the downstream side catalyst 13b, that is, SOXA·K, is added to the SO₂ adsorption amount ΣSOₓ. Next, at step 72, it is judged if the temperature elevation flag which is set when the SOₓ trap catalyst 13 should be elevated in temperature has been set. When the temperature elevation flag is not set, the routine proceeds to step 73 where it is judged if the temperature TC of the downstream side catalyst 13b is higher than the adsorbed SO₂ movement start temperature TX. When TC>TX, the routine proceeds to step 74 where ΣSOₓ is cleared.

As opposed to this, when it is judged at step 73 that TC≤TX, the routine proceeds to step 75 where it is judged if the SO₂ adsorption amount ΣSOₓ exceeds the allowable limit value SW. When ΣSOₓ>SW, the routine proceeds to step 76 where the temperature elevation flag is set. When the temperature elevation flag is set, at the next processing cycle, the routine proceeds to step 72 to step 77 where temperature elevation control of the SOₓ trap catalyst 13 is performed. Next, at step 78, it is judged if the temperature TC of the downstream side catalyst 13b becomes higher than the adsorbed SO₂ movement start temperature TX. When TC>TX, the routine proceeds to step 79 where ΣSOₓ is cleared, then at step 80, the temperature elevation flag is reset.

### Reference Signs List

4... intake manifold
5... exhaust manifold
12... oxidation catalyst
13... SOₓ trap catalyst
13a... upstream side catalyst
13b... downstream side catalyst
14... NOₓ storage catalyst
50... base member
51... exhaust gas channel
52... coating layer
53, 60... catalyst carrier
54... precious metal catalyst
55, 62... SOₓ storing material

## Claims

1. A method for exhaust purification of an internal combustion engine in which an SOₓ trap catalyst having an SOₓ storing material is arranged in an engine exhaust passage and SOₓ contained in an exhaust gas is stored in the SOₓ storing material, wherein the SOₓ trap catalyst is comprised of an upstream side catalyst and a downstream side catalyst into which the exhaust gas flowing out from the upstream side catalyst flows, the SOₓ storing material of the upstream side catalyst is mainly comprised of an alkali earth metal, the SOₓ storing material of the downstream side catalyst is mainly comprised of an alkali metal, wherein a temperature of the downstream side catalyst is maintained at less than a melting point of nitrates of the alkali metal which is contained in the SOₓ storing material of the downstream side catalyst.

2. The method as claimed in claim 1, wherein the SOₓ storage material of the downstream side catalyst is comprised of an alkali metal and an alkali earth metal.

3. The method as claimed in claim 1, wherein the upstream side catalyst and the downstream side catalyst are comprised of a single monolithic catalyst which is integrally formed or is comprised of a pair of catalysts which are arranged at a distance from each other.

4. The method as claimed in claim 1, wherein a precious metal catalyst is carried on the upstream side catalyst and the downstream side catalyst.

5. The method as claimed in any of claims 1 to 4, wherein the upstream side catalyst and the downstream side catalyst contain oxides which can adsorb SO₂ contained in exhaust gas, and when the temperature of the catalyst becomes higher than a start temperature where the SO₂ adsorbed at the oxides starts to move toward the corresponding SOₓ storing material, the SO₂ adsorbed at the oxides is oxidized and stored in the corresponding SOₓ storing material in the form of sulfates, wherein the temperatures of the upstream side catalyst and the downstream side catalyst are repeatedly changed from the start temperature or less to the start temperature or more during engine operation.

6. The method as claimed in claim 5, wherein said oxides are comprised of metal oxides, and the metal oxides are comprised of an oxygen absorbing and releasing material which changes in state of oxidation in the exhaust gas.

7. The method as claimed in claim 6, wherein a metal which forms the oxygen absorbing and releasing material is comprised of cerium Ce or iron Fe.

8. The method as claimed in claim 5, wherein when one or both of the temperature of the upstream side catalyst and the temperature of the downstream side catalyst do not exceed the start temperature for a predetermined period, a temperature elevation action of the upstream side catalyst and the downstream side catalyst is performed so that the temperatures of the upstream side catalyst and the downstream side catalyst exceed the start temperature.

9. The method as claimed in claim 8, wherein an adsorption amount of SO₂ adsorbed at the oxides is calculated, and the temperature of the upstream side catalyst and the downstream side catalyst is elevated when the calculated SO₂ adsorption amount exceeds a predetermined allowable limit value.

## Patentansprüche

1. Verfahren zur Abgasreinigung eines Verbrennungsmotors in welchem ein ein SOₓ Speichermaterial aufweisender SOₓ Trap-Katalysator in einem Motorabgasdurchlass angeordnet ist und in einem Abgas enthaltenes SOₓ in dem SOₓ Speichermaterial gespeichert ist, wobei der SOₓ Trap-Katalysator besteht aus einem stromaufwärtsseitigen Katalysator und einem stromabwärtsseitigen Katalysator, in welchen das aus dem stromaufwärtsseitigen Katalysator fließende Abgas fließt, das SOₓ Speichermaterial des stromaufwärtsseitigen Katalysators hauptsächlich aus einem Erdalkalimetall besteht, das SOₓ Speichermaterial des stromabwärtsseitigen Katalysators hauptsächlich aus einem Alkalimetall besteht, wobei eine Temperatur des stromabwärtsseitigen Katalysators aufrecht erhalten wird bei unter einem Schmelzpunkt der Nitrate des Alkalimetalls, welches in dem SOₓ Speichermaterial des stromabwärtsseitigen Katalysators enthalten ist.

2. Verfahren wie in Anspruch 1 beansprucht, wobei das SOₓ Speichermaterial des stromabwärtsseitigen Katalysators aus einem Alkalimetall und einem Erdalkalimetall besteht.

3. Verfahren wie in Anspruch 1 beansprucht, wobei der stromaufwärtsseitige Katalysator und der stromabwärtsseitige Katalysator bestehen aus einem einzelnen monolithischen Katalysator, welcher einstückig gebildet ist oder aus einem Paar von Katalysatoren besteht, welche in einem Abstand voneinander angeordnet sind.

4. Verfahren wie in Anspruch 1 beansprucht, wobei ein Edelmetallkatalysator auf dem stromaufwärtsseitigen Katalysator und dem stromabwärtsseitigen Katalysator geträgert ist.

5. Verfahren wie in einem der Ansprüche 1 bis 4 beansprucht, wobei der stromaufwärtsseitige Katalysator und der stromabwärtsseitige Katalysator Oxide enthalten, welche in dem Abgas enthaltenes SO₂ adsorbieren können, und wenn die Temperatur des Katalysators höher wird als eine Starttemperatur bei der das an den Oxiden adsorbiertes SO₂ beginnt sich zu dem entsprechenden SOₓ Speichermaterial zu bewegen, wird das an den Oxiden adsorbierte SO₂ oxidiert und gespeichert in dem entsprechenden SOₓ Speichermaterial in der Form von Sulfaten, wobei die Temperaturen des stromaufwärtsseitigen Katalysators und des stromabwärtsseitigen Katalysators während Motorbetrieb von der Starttemperatur oder weniger zu der Starttemperatur oder mehr wiederholt geändert werden.

6. Verfahren wie in Anspruch 5 beansprucht, wobei die Oxide aus Metalloxiden bestehen und die Metalloxide aus einem sauerstoffabsorbierenden und freilassenden Material, welches sich im Zustand der Oxidation in dem Abgas ändert, bestehen.

7. Verfahren wie in Anspruch 6 beansprucht, wobei ein Metall, welches bildet das sauerstoffabsorbierende und freilassende Material aus Cer Ce und Eisen Fe besteht.

8. Verfahren wie in Anspruch 5 beansprucht, wobei wenn eine oder beide der Temperatur des stromaufwärtsseitigen Katalysators und der Temperatur des stromabwärtsseitigen Katalysators die Starttemperatur für einen vorbestimmten Zeitraum nicht überschreiten, wird eine Temperaturerhöhungshandlung des stromaufwärtsseitigen Katalysators und des stromabwärtsseitigen Katalysators durchgeführt, so dass die Temperaturen des stromaufwärtsseitigen Katalysators und des stromabwärtsseitigen Katalysators die Starttemperatur überschreiten.

9. Verfahren wie in Anspruch 8 beansprucht, wobei eine Adsorptionsmenge von an den Oxiden adsorbierten SO₂ berechnet wird, und die Temperatur des stromaufwärtsseitigen Katalysators und des stromabwärtsseitigen Katalysators erhöht wird, wenn die berechnete SO₂ Adsorptionsmenge einen vorbestimmten zulässigen Grenzwert überschreitet.

## Revendications

1. Procédé pour purification d'échappement d'un moteur à combustion interne dans lequel un catalyseur de piège de SOₓ ayant un matériau de stockage de SOₓ est disposé dans un passage d'échappement de moteur et SOₓ contenu dans un gaz d'échappement est stocké dans le matériau de stockage de SOₓ, dans lequel le catalyseur de piège de SOₓ est constitué d'un catalyseur de côté amont et d'un catalyseur de côté aval dans lequel le gaz d'échappement s'écoulant à l'extérieur du catalyseur de côté amont s'écoule, le matériau de stockage de SOₓ du catalyseur de côté amont est principalement constitué d'un métal alcalino-terreux, le matériau de stockage de SOₓ du catalyseur de côté aval est principalement constitué d'un métal alcalin, dans lequel une température du catalyseur de côté aval est maintenue inférieure à un point de fusion de nitrates du métal alcalin qui est contenu dans le matériau de stockage de SOₓ du catalyseur de côté aval.

2. Procédé selon la revendication 1, dans lequel le matériau de stockage de SOₓ du catalyseur de côté aval est constitué d'un métal alcalin et d'un métal alcalino-terreux.

3. Procédé selon la revendication 1, dans lequel le catalyseur de côté amont et le catalyseur de côté aval sont constitués d'un seul catalyseur monolithique qui est intégralement formé ou est constitué d'une paire de catalyseurs qui sont disposés à une distance l'un de l'autre.

4. Procédé selon la revendication 1, dans lequel un catalyseur de métal précieux est supporté sur le catalyseur de côté amont et le catalyseur de côté aval.

5. Procédé selon l'une quelconque des revendications 1 à 4, dans lequel le catalyseur de côté amont et le catalyseur de côté aval contiennent des oxydes qui peuvent adsorber SO₂ contenu dans un gaz d'échappement, et lorsque la température du catalyseur devient supérieure à une température de début où le SO₂ adsorbé sur les oxydes commence à se déplacer vers le matériau de stockage de SOₓ correspondant, le SO₂ adsorbé sur les oxydes est oxydé et stocké dans le matériau de stockage de SOₓ correspondant dans la forme de sulfates, dans lequel les températures du catalyseur de côté amont et du catalyseur de côté aval sont modifiées de manière répétée de la température de début ou inférieure jusqu'à la température de début ou supérieure pendant le fonctionnement du moteur.

6. Procédé selon la revendication 5, dans lequel lesdits oxydes sont constitués d'oxydes de métaux, et les oxydes de métaux sont constitués d'un matériau absorbant et libérant l'oxygène qui change d'état d'oxydation dans le gaz d'échappement.

7. Procédé selon la revendication 6, dans lequel un métal qui forme le matériau absorbant et libérant l'oxygène est constitué de cérium Ce ou de fer Fe.

8. Procédé selon la revendication 5, dans lequel lorsque une ou les deux de la température du catalyseur de côté amont et de la température du catalyseur de côté aval n'excèdent pas la température de début pour une période prédéterminée, une action d'élévation de température du catalyseur de côté amont et du catalyseur de côté aval est réalisée de sorte que les températures du catalyseur de côté amont et du catalyseur de côté aval excèdent la température de début.

9. Procédé selon la revendication 8, dans lequel une quantité d'adsorption de SO₂ adsorbé sur les oxydes est calculée, et la température du catalyseur de côté amont et du catalyseur de côté aval est élevée lorsque la quantité d'adsorption de SO₂ calculée excède une valeur limite permise prédéterminée.
